# EUROPÄISCHE PATENTSCHRIFT

(11) **EP 3 930 956 B1**
(45) Veröffentlichungstag und Bekanntmachung des Hinweises auf die Patenterteilung: **22.04.2026**
(21) Anmeldenummer: 20708066.4
(22) Anmeldetag: 27.02.2020
(51) Int. Cl.: B23P 6/00, B22F 3/105, B04B 1/20, B23K 9/04, B33Y 10/00, B33Y 80/00

(54) **REPARATUR VON BESCHÄDIGTEN BAUTEILEN UND/ODER BESCHÄDIGTEN BAUTEILABSCHNITTEN EINER VOLLMANTEL-SCHNECKENZENTRIFUGE**
REPAIR OF DAMAGED COMPONENTS AND/OR DAMAGED COMPONENT PORTIONS OF A SOLID BOWL CENTRIFUGE
RÉPARATION DE PIÈCES ENDOMMAGÉES ET/OU DE SEGMENTS ENDOMMAGÉS DE PIÈCES D'UNE CENTRIFUGEUSE À VIS À BOL PLEIN

(30) Priorität: 28.02.2019 DE 102019105082
(43) Veröffentlichungstag der Anmeldung: 05.01.2022
(73) Patentinhaber: Flottweg SE, 84137 Vilsbiburg (DE)
(72) Erfinder: MEYER, Manfred, 84155 Bodenkirchen (DE); SCHEIDHAMMER, Matthias, 84137 Vilsbiburg (DE); HUBER, Martin, 84155 Bodenkirchen (DE); PAGELSEN, Thomas, 84186 Vilsheim (DE); KICK, Klaus, 84155 Bodenkirchen (DE)
(74) Vertreter: Meissner Bolte Partnerschaft mbB
(86) Internationale Anmeldenummer: PCT/EP2020/055113
(87) Internationale Veröffentlichungsnummer: WO 2020/174036

(56) Entgegenhaltungen:
- WO-A1-2018/149454
- DE-A1- 102014 222 159
- JP-U- S5 673 549

## Beschreibung

Die Erfindung betrifft ein Verfahren zur Reparatur von beschädigten Bauteilen und/oder beschädigten Bauteilabschnitten einer Vollmantel-Schneckenzentrifuge, gemäß Anspruch 1.

Zentrifugenschnecken einer Vollmantel-Schneckenzentrifuge basieren üblicherweise auf einem zylindrischen oder konischen Grundkörper und mindestens einer Schneckenwendel. Eine derartige Schneckenwendel ist oftmals aus einem Blechmaterial gefertigt. Aufgrund eines Verschleißes ist es teilweise notwendig insbesondere die Schneckenwendel einer Zentrifugenschnecke zu reparieren.

In JP S56 73549 U wird ein mechanisches Ausmessen einer Schneckenwendel offenbart. Bei entsprechender Feststellung abweichender Maße von einem bestimmten Sollwert kann das Ersetzen der Schnecke bzw. einzelner Bauteilabschnitte erfolgen.

Aus WO 2018/149454 A1 ist es bekannt eine Schneckennabe im Rahmen eines formgebenden Aufbauschweißverfahrens herzustellen.

In DE 10 2014 222159 A1 wird ein Reparaturverfahren für eine Laufschaufel einer Turbine eines Flugtriebwerks offenbart, wobei dieses Reparaturverfahren in einer Prozesskammer einer Vorrichtung zum generativen Wiederherstellen des Bauteils durchgeführt wird. Der zu reparierende Bauteilbereich wird außerhalb der Vorrichtung mittels eines Trennverfahrens abgetrennt.

Im Reparaturfall ist es meist notwendig, die vorhandene Schneckenwendel in mehreren subtraktiven Arbeitsschritten vollständig zu entfernen. Im Anschluss daran wird eine neue Schneckenwendel hergestellt. Diese Schneckenwendel wird auf den Schneckenkörper aufgewunden. Ein derartiges Reparaturverfahren entspricht im Wesentlichen einer Neufertigung einer Zentrifugenschnecke.

Ähnliches gilt auch im Zusammenhang mit weiteren Bauteilen einer Vollmantel-Schneckenzentrifuge. Dabei kann es sich um alle Bauteile einer Vollmantel-Schneckenzentrifuge handeln. Dies betrifft u.a. alle Rotorbauteile, d.h. alle Bauteile, die im Zusammenhang mit der Zentrifugentrommel und der Zentrifugenschnecke stehen. Die bisher bekannten Reparaturverfahren sind äußerst aufwändig.

Des Weiteren sind bislang keine Verfahren bekannt, die die Reparatur von Schneckenkörper bzw. Schneckennaben ermöglichen, der/die aus mehreren Einzelteilen, insbesondere aus mehreren Stäben und/oder Streben, gebildet ist. Ausgehend von dem Vorgenannten besteht die Aufgabe der vorliegenden Erfindung darin, ein weiterentwickeltes Verfahren zur Reparatur von beschädigten Bauteilen und/oder beschädigten Bauteilabschnitten einer Vollmantel-Schneckenzentrifuge, anzugeben, wobei das Reparaturverfahren einfach durchzuführen sein soll und insbesondere im Vergleich zu bisher bekannten Reparaturverfahren schneller durchführbar sein soll.

Erfindungsgemäß wird diese Aufgabe im Hinblick auf das Verfahren zur Reparatur von beschädigten Bauteilen und/oder beschädigten Bauteilabschnitten einer Vollmantel-Schneckenzentrifuge durch den Gegenstand des Anspruches 1 gelöst. Vorteilhafte und zweckmäßige Ausgestaltungen des erfindungsgemäßen Verfahrens zur Reparatur sind in den Unteransprüchen angegeben.

Die Erfindung beruht auf dem Gedanken, ein Verfahren zur Reparatur von beschädigten Bauteilen und/oder beschädigten Bauteilabschnitten einer Vollmantel-Schneckenzentrifuge anzugeben. Bei den beschädigten Bauteilen und/oder beschädigten Bauteilabschnitten handelt es sich um derartige Bauteile und/oder Bauteilabschnitte, die sich noch an oder in der Vollmantel-Schneckenzentrifuge befinden und entsprechende Beschädigungen und/oder Verschleißzustände aufweisen.

Das erfindungsgemäße Verfahren umfasst die Schritte des Anspruchs 1.

Die Erfindung beruht somit auf dem Gedanken, das beschädigte Bauteil und/oder den beschädigten Bauteilabschnitt durch formgebenden additiven Materialauftrag zu ersetzen. Hierzu ist es notwendig, in einem vorhergehenden Verfahrensschritt die Maße eines zu ersetzenden Bauteils und/oder eines zu ersetzenden Bauteilabschnitts in Relation zu benachbarten Bauteilen und/oder Bauteilabschnitten der Vollmantel-Schneckenzentrifuge zu erfassen.

Als ein zu ersetzendes Bauteil und/oder ein zu ersetzender Bauteilabschnitt ist ein derartiges Bauteil und/oder ein derartiger Bauteilabschnitt zu verstehen, der sich nicht mehr in oder an der Vollmantel-Schneckenzentrifuge befindet. Dies kann darauf zurückzuführen sein, dass sich das Bauteil und/oder Bauteilabschnitt bereits durch den Verschleißzustand selbstständig von benachbarten Bauteilen und/oder Bauteilabschnitten der Vollmantel-Schneckenzentrifuge abgelöst hat. Das Verfahren umfasst einen Schritt a), nämlich ein Entfernen eines beschädigten Bauteils und/oder eines beschädigten Bauteilabschnitts, wobei der Schritt a) vor dem Schritt b) erfolgt.

In diesem Fall hat sich das zu ersetzende Bauteil und/oder der zu ersetzende Abschnitt noch nicht selbst abgelöst oder es ist ein zusätzliches Entfernen bestimmter Abschnitte eines beschädigten Bauteils und/oder eines beschädigten Bauteilabschnitts notwendig.

Beispielsweise ist es möglich, dass ein beschädigtes Bauteil sich zwar bereits selbstständig abgelöst hat, die Ablösekante jedoch derart beschaffen ist, dass eine entsprechende Nachbearbeitung notwendig ist. Beispielsweise ist es möglich, dass ein Teil einer Schneckenwendelspitze von der Schneckenwendel abgebrochen ist. Zur weiteren Bearbeitung kann es möglich sein, dass die Abbruchkante nicht zum Ersetzen der Schneckenwendelspitze durch formgebenden additiven Materialauftrag geeignet ist, so dass die Abbruchkante selbst entfernt wird und ein entsprechender Randbereich zur späteren Anbringung des zu ersetzenden beschädigten Bauteils geschaffen wird.

Das Entfernen im Schritt a) erfolgt mittels eines thermischen Trennverfahrens.

Insbesondere kann im Schritt a) das Entfernen mittels Laserschneiden und/oder Plasmaschneiden erfolgen.

Der Schritt a) erfolgt automatisiert. Hierzu kann der Schritt a) roboter- und/oder maschinengestützt durchgeführt werden.

Im Schritt a) wird eine Verschleißschutz-Beschichtung entfernt, wobei es sich dabei um eine Verschleißschutz-Beschichtung einer Schneckenwendel handelt. Eine derartige Verschleißschutz-Beschichtung kann auf den Förderflächen der Schneckenwendel aufgebracht sein. Derartige Verschleißschutz-Beschichtungen können aus Wolframkarbidverbindungen und/oder Chrom-Kobaltverbindungen (Stellite) und/oder aus Hartmetallplatten und/oder aus Keramikplatten und/oder einer Keramikbeschichtung gebildet sein.

Vorzugsweise nach dem Durchführen des Schrittes a) kann es vorteilhaft sein, etwaige Rückstände, die aufgrund eines thermischen Trennverfahrens gebildet werden, vor den weiteren Schritten, insbesondere vor dem Schritt b) zu entfernen.

Im Schritt b) erfolgt vorzugsweise eine dreidimensionale Vermessung, insbesondere mittels eines Lasersystems. Insbesondere wird mit Hilfe optischer Sensorik das verbleibende benachbarte Bauteil und/oder der verbleibende benachbarte Bauteilabschnitt dreidimensional vermessen.

Im Schritt c) wird ein CMT^{®}-Schweißen (cold metal transfer) und/oder ein Impulslichtbogen-Schweißen und/oder ein thermisches Spritzverfahren durchgeführt.

Besonders bevorzugt erfolgt das Aufbauschweißen mit einem Kurzlichtbogen, insbesondere einem energiereduzierten Kurzlichtbogen. Ein derartiges Verfahren mit Kurzlichtbogen wird auch als Cold-arc bezeichnet.

Insbesondere ist es möglich, einen Lichtbogen-Draht-Prozess und/oder einen Lichtbogen-Pulver-Prozess und/oder einen Laser-Draht-Prozess und/oder einen Laser-Pulver-Prozess anzuwenden und diesbezüglich einen formgebenden additiven Materialauftrag durchzuführen. Mit anderen Worten kann das aufzutragende Material in Pulverform und/oder als Draht vorliegen, wobei dieses mittels eines Lichtbogens und/oder eines Lasers erwärmt wird.

Ein Aufbauschweißen erfolgt vorzugsweise derart, dass mehrere aufeinander aufgetragene Schweißschichten das zu ersetzende Bauteil bzw. den zu ersetzenden Bauteilabschnitt bilden. Hierbei wird eine erste Schweißschicht auf ein benachbartes Bauteil und/oder einen benachbarten Bauteilabschnitt aufgetragen. Auf diese erste Schweißschicht werden vorzugsweise weitere Schweißschichten aufgebracht. Besonders bevorzugt ist das Schweißgas aus einer der Untergruppen der Hauptgruppen I, M1, M2 oder N der Norm DIN EN ISO 14175 ausgewählt.

Es wird vorzugsweise ein Schweißen mit aktivem, reaktionsfähigen Schweißgas oder mit inertem Schweißgas durchgeführt. Ein derartiges Schweißverfahren kann auch als MAG- bzw. MIG-Schweißen bzw. als Schweißen mit Aktivgas oder Inertgas bezeichnet werden. Derartige Schweißverfahren werden zusammengefasst als Metallschutzgasschweißverfahren (MSG) bezeichnet.

Die Hauptgruppe I umfasst Schweißgase mit 100 Volumen-Prozent nominell Argon (Untergruppe 1), 100 Volumen-Prozent nominell Helium (Untergruppe 2) und 0,5 bis 95 Volumen-Prozent nominell Helium sowie Rest Argon (Untergruppe 3). Diese Schweißgase sind vollständig inert.

Die Hauptgruppe M1, Untergruppe 1 umfasst Schweißgase mit 0,5 bis 5,0 Volumen-Prozent nominell Kohlendioxid, 0,5 bis 5,0 Volumen-Prozent nominell Wasserstoff sowie Rest Argon oder Helium. Diese Schweißgase sind gering oxidierend und nur gering reduzierend. Die Hauptgruppe M1, Untergruppe 2 umfasst Schweißgase mit 0,5 bis 5,0 Volumen-Prozent nominell Kohlendioxid sowie Rest Argon oder Helium. Diese Schweißgase sind gering oxidierend.

Die Hauptgruppe M1, Untergruppe 3 umfasst Schweißgase mit 0,5 bis 3,0 Volumen-Prozent nominell Sauerstoff sowie Rest Argon oder Helium. Diese Schweißgase sind ebenfalls gering oxidierend. Die Hauptgruppe M1, Untergruppe 4 umfasst Schweißgase mit 0,5 bis 5,0 Volumen-Prozent nominell Kohlendioxid, 0,5 bis 3,0 Volumen-Prozent nominell Sauerstoff sowie Rest Argon oder Helium. Diese Schweißgase sind wiederum gering oxidierend.

Die Hauptgruppe M2, Untergruppe 0 umfasst Schweißgase mit 5,0 bis 15,0 Volumen-Prozent nominell Kohlendioxid sowie Rest Argon oder Helium. Diese Schweißgase sind wenig oxidierend. Die Hauptgruppe M2, Untergruppe 1 umfasst Schweißgase mit 15,0 bis 25,0 Volumen-Prozent nominell Kohlendioxid sowie Rest Argon oder Helium. Diese Schweißgase sind ebenfalls wenig oxidierend. Die Hauptgruppe M2, Untergruppe 2 umfasst Schweißgase mit 3,0 bis 10,0 Volumen-Prozent nominell Sauerstoff sowie Rest Argon oder Helium. Diese Schweißgase sind ebenfalls noch wenig oxidierend. Die Hauptgruppe M2, Untergruppe 3 umfasst Schweißgase mit 0,5 bis 5,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 4 umfasst Schweißgase mit 5,0 bis 15,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 5 umfasst Schweißgase mit 5,0 bis 15,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 6 umfasst Schweißgase mit 15,0 bis 25,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 7 umfasst Schweißgase mit 15,0 bis 25,0 Volumen-Prozent nominell Kohlendioxid, 3,0 bis 10,0 Volumen-Prozent nominell Sauerstoff sowie Rest Argon oder Helium. Auch diese Schweißgase sind noch vergleichsweise wenig oxidierend.

Die Hauptgruppe N, Untergruppe 1 umfasst Schweißgase mit 100 Volumen-Prozent nominell Stickstoff. Die Hauptgruppe N, Untergruppe 2 umfasst Schweißgase mit 0,5 bis 5,0 Volumen-Prozent nominell Stickstoff sowie Rest Argon oder Helium. Die Hauptgruppe N, Untergruppe 3 umfasst Schweißgase mit 5,0 bis 50,0 Volumen-Prozent nominell Stickstoff sowie Rest Argon oder Helium. Die Hauptgruppe N, Untergruppe 4 umfasst Schweißgase mit 0,5 bis 1,0 Volumen-Prozent nominell Wasserstoff, 0,5 bis 5,0 Volumen-Prozent nominell Stickstoff sowie Rest Argon oder Helium. Die Hauptgruppe N, Untergruppe 5 umfasst Schweißgase mit 0,5 bis 50,0 Volumen-Prozent nominell Wasserstoff sowie Rest Stickstoff. Diese Schweißgase sind sämtlich reaktionsträge, sie sind mit hohem Argon- oder Helium-Gehalt inert und sie sind selbst mit steigendem Wasserstoff-Gehalt nur wenig reduzierend.

Zusammenfassend werden vorzugsweise also gezielt Schweißgase gewählt, die inert sind, wenig oxidierend und/oder wenig reduzierend. Mit einem solchen Verfahren kann bei dem formgebenden Aufbauschweißen mit einer oxidationsarmen Schweißraupe und weitgehend ohne Schlacke gearbeitet werden. Dies ist insbesondere für das Übereinanderlegen von Schweißraupen von besonderem Vorteil. Darüber hinaus kann mit einem besonders schnellen Schweißtempo gearbeitet werden. Dies ermöglicht zunächst besonders kurze Reparaturzeiten. Der eigentliche Vorteil von schnellem Schweißtempo liegt aber darin, dass das zu ersetzende Bauteil und/oder der zu ersetzende Bauteilabschnitt beim Schweißen nur wenig punktuell erhitzt wird und sich damit nur wenig Verzug bzw. Verformung ergibt.

Der Vorteil der bevorzugten Vorgehensweise liegt aber darin, dass sich bei einem solchen Aufbauschweißen eine besonders hohe Verschleißfestigkeit der dabei hergestellten Oberfläche ergibt.

So kann nach diesem Ausführungsbeispiel des erfindungsgemäßen Reparaturverfahrens auf eine nachträgliche Vergütung, insbesondere auf ein Aufbringen von Verschleißschichten verzichtet werden.

Beispielsweise weist das Schweißgas einen Anteil an Kohlendioxid von weniger als zwanzig Volumen-Prozent nominell auf. Ein derart geringer Kohlendioxidgehalt ermöglicht es insbesondere, dass Baustähle mittels Impulsschweißen verarbeitet werden können. Zugleich ist ein vergleichsweise hoher Abbrand des Schweißdrahtes möglich. Damit ergeben sich ein hoher Masseaufbau während des Schweißens und eine besonders schnelle Arbeitsweise. Vorzugsweise wird als Schweißgas ferner Schweißgas verwendet, das einen Anteil an Sauerstoff von weniger als drei Volumen-Prozent nominell aufweist. Solche Schweißgase sind besonders wenig oxidierend. Schweißgase, die einen hohen Anteil an Argon aufweisen, sind ferner besonders preiswert.

In einer Ausführungsform der Erfindung wird eine Schutzgas-Schweißeinrichtung mit einem Impulslichtbogen betrieben. Ein solcher Impulslichtbogen lässt eine präzise Steuerung der Abschmelzung des Schweißdrahts an der Schutzgas-Schweißeinrichtung zu. Darüber hinaus kann der Wärmeeintrag in das zu ersetzende Bauteil und/oder in den zu ersetzenden Bauteilabschnitt gezielt besonders geringgehalten werden. Somit können temperaturbedingte Verformungen geringgehalten werden. Der elektrische Schweißstrom der derartigen Impulslichtbogen-Schweißeinrichtung weist vorzugsweise einen Grundstrom kleiner 200 Ampere und einen Impulsstrom größer 200 Ampere auf. Solche Schweißströme sind vorteilhaft bei besonders präzisem Materialaufbau mit vergleichsweise kleiner Abschmelzleistung. Als Schweißgas wird dabei vorteilhaft ein Schweißgas mit 98 Volumen-Prozent nominell Argon und 2 Volumen-Prozent nominell Kohlendioxid verwendet.

Von besonderem Vorteil ist es ferner, eine Schutzgas-Schweißeinrichtung mit einem Kurzlichtbogen, insbesondere einem energiereduzierten Kurzlichtbogen zu betreiben. Ein solches Verfahren mit Kurzlichtbogen wird auch als Cold-Arc bezeichnet, ein Verfahren mit besonders kaltem Lichtbogen also. Für die Erzielung eines dennoch schmelzstarken Lichtbogens wird besonders vorteilhaft mit einem verstärkten Aufschmelzstromimpuls gearbeitet.

Bei einem Aufbauschweißen kann die erste Schweißschicht breiter ausgebildet sein, als die zweite Schweißschicht. Dies geschieht insbesondere indem eine Schutzgas-Schweißeinrichtung während des Auftragens der ersten Schweißschicht mit einem höheren Schweißstrom betrieben wird, als während des Aufbringens der mindestens zweiten Schweißschicht.

Alternativ kann bei der ersten Schweißschicht pendelnd geschweißt werden, mit langsamerer Schweißgeschwindigkeit oder mit höherem Drahtvorschub. Mit der derartigen Vorgehensweise wird die erste Schweißschicht mit besonders starkem bzw. großem Masseauftrag ausgeführt. Die derart volumenstarke erste Schweißschicht wird dann von einer zweiten Schweißschicht überlagert, die weniger Volumen aufweist und demnach schmäler ist. Es kann somit ein gerundeter Fuß bzw. Ansatz an einem Grundkörper eines Bauteils gebildet werden, der eine geringe Kerbwirkung und damit eine hohe Steifigkeit aufweist.

Eine Schutzgas-Schweißeinrichtung wird besonders vorteilhaft mit einem Schweißdraht, oder vorteilhaft auch zwei Schweißdrähten (Twin-Schweißverfahren) mit einem Durchmesser von 0,5 mm bis 3,0 mm, bevorzugt von 1,0 mm bis 1,6 mm, betrieben.

Überraschenderweise führt gerade ein solcher Schweißdraht-Durchmesser zu einer hohen Schweißgeschwindigkeit und zugleich zu besonders geringer thermisch bedingter Verformung. Besonders bevorzugt sind einzelne Schweißschichten bzw. Schweißlagen mit einer Breite von 6 bis 7 mm.

Vorteilhaft ist insbesondere auch ein im Querschnitt rechteckiges Schweißband.

Ein Grundkörper eines zu ersetzenden Bauteils und/oder eines zu ersetzenden Bauteilabschnitts kann bevorzugt während der Reparatur bewegt werden. Mit dem Bewegen wird das Bauteils und/oder der Bauteilabschnitt dabei an seiner Schweißstelle derart ausgerichtet, dass sich für die aufgebrachte Schweißlage eine optimale Position ergibt. Dabei wird die Schweißlage besonders bevorzugt auf einer waagrechten Oberfläche aufgebracht.

Vorteilhaft ist es auch, wenn die Schweißlage auf eine in Schweißrichtung leicht ansteigende Oberfläche aufgebracht wird. Der Steigungswinkel beträgt vorzugsweise zwischen 5° und 15°, vorteilhaft zwischen 7° und 10°. Der Grundkörper wird entsprechend vorzugsweise derart bewegt, dass am Schweißort der Schutzgas-Schweißeinrichtung eine horizontale Schweißoberfläche oder eine in Schweißrichtung der Schutzgas-Schweißeinrichtung ansteigende Schweißoberfläche vorliegt.

Das Aufbringen einer Schweißlage auf eine in Schweißrichtung leicht ansteigende Oberfläche hat besondere Vorteile. Es ist dabei möglich, die Vorneigung eines Schneckengangs, d.h. die Vorneigung einer Schneckenwendel, optimal nachzubilden. Mit anderen Worten kann aufgrund des erfindungsgemäßen Verfahrens eine bereits existierende Vorneigung einer Schneckenwendel bei zu ersetzenden Bauteilen und/oder Bauteilabschnitten besonders gut nachgebildet werden.

Das mittels formgebenden additiven Materialauftrag, insbesondere mittels Aufbauschweißens, hergestellte Bauteil und/oder der Bauteilabschnitt kann exakt die gleiche Vorneigung aufweisen, wie das vorher vorhandene Bauteil und/oder der vorher vorhandene Bauteilabschnitt, das/der mittels des erfindungsgemäßen Verfahrens ersetzt wurde. Ein nachträglicher Wuchtaufwand hinsichtlich der reparierten Vollmantel-Schneckenzentrifuge, insbesondere der Zentrifugenschnecke, wird erheblich minimiert.

Des Weiteren ist es aufgrund des erfindungsgemäßen Verfahrens möglich, bei der Reparatur von beschädigten Bauteilen und/oder beschädigten Bauteilabschnitten einer Vollmantel-Schneckenzentrifuge, zugleich ein Wuchtverfahren zu Vereinfachen.

Bei der Reparatur von beschädigten Bauteilen und/oder beschädigten Bauteilabschnitten einer Vollmantel-Schneckenzentrifuge können zugleich Berechnungen hinsichtlich auszubildender Wuchtabschnitte erfolgen. Es müssen demnach nicht mehr, wie dies bislang notwendig ist, sichtbare und/oder einzelne Wuchtgewichte auf Bauteile und/oder Bauteilabschnitte einer Vollmantel-Schneckenzentrifuge aufgebracht werden. Vielmehr ist es möglich, bereits bei der Reparatur von beschädigten Bauteilen und/oder beschädigten Bauteilabschnitten einer Vollmantel-Schneckenzentrifuge die Gewichte der zu ersetzenden Bauteile und/oder Bauteilabschnitte derart zu berechnen und zu bestimmen, dass keine zusätzlichen Wuchtgewichte aufgebracht werden müssen. Es können Verfahren zum Aufbringen, insbesondere Aufschweißen, von Wuchtgewichten entfallen.

Bei der Reparatur von beschädigten Bauteilen und/oder beschädigten Bauteilabschnitten einer Vollmantel-Schneckenzentrifuge ist es außerdem aufgrund des erfindungsgemäßen Verfahrens möglich, eine höhere Festigkeit eines ersetzten Bauteils und/oder eines ersetzten Bauteilabschnitts zu erzielen. Die erhöhte Festigkeit ist insbesondere im Vergleich zu dem vorher beschädigten Bauteil und/oder Bauteilabschnitts zu erzielen.

Demnach ist es möglich, aufgrund des erfindungsgemäßen Verfahren nicht nur ein beschädigtes Bauteil und/oder einen beschädigten Bauteilabschnitt zu reparieren, sondern zugleich ein hinsichtlich der Festigkeit verbessertes neues Bauteil und/oder einen hinsichtlich der Festigkeit verbesserten neuen Bauteilabschnitt herzustellen. Ein Bauteil und/oder ein Bauteilabschnitt, das/der mit Hilfe eines formgebenden additiven Materialauftrages hergestellt ist, weist eine höhere Festigkeit auf, als beispielsweise eine konventionell mittels Blech- oder Metallbearbeitung hergestelltes Bauteil.

Das erfindungsgemäße Verfahren weist zusätzlich den Vorteil auf, dass das zu ersetzende Bauteil und/oder der zu ersetzende Bauteilabschnitt äußerst exakt nachgebildet werden kann. Das mittels formgebenden additiven Materialauftrag hergestellte ersetzte Bauteil und/oder der ersetzte Bauteilabschnitt kann mit geringeren Toleranzen hergestellt werden, als dies durch konventionelle Reparaturverfahren möglich ist.

Das erfindungsgemäße Verfahren weist ferner den Vorteil auf, dass das zu ersetzende Bauteil und/oder der zu ersetzende Bauteilabschnitt topologisch optimiert ausgebildet werden kann. Es ist möglich zwischen Schritt b) und Schritt c) einen Zwischenschritt durchzuführen.

Im Zwischenschritt kann eine Bestimmung eines geometrisch optimierten Bauteils/Bauteilabschnitts erfolgen. Das zu fertigende Bauteil und/oder der zu fertigende Bauteilabschnitt kann beispielsweise mit einer Geometrie ausgebildet sein, die mindestens einen Hohlraum und/oder eine Aussparung aufweist. Mit Hilfe von Hohlräumen und/oder Aussparungen können beispielsweise Gewichts- und/oder Materialersparnisse erzielt werden. Bislang war es nicht möglich, bei der Reparatur eines beschädigten Bauteils und/oder eines beschädigten Bauteilabschnitts zugleich Optimierungen am Bauteil/Bauteilabschnitt durchzuführen.

Das erfindungsgemäße Verfahren weist außerdem den Vorteil auf, dass das zu ersetzende Bauteil und/oder der zu ersetzende Bauteilabschnitt aus einem Material hergestellt werden kann, das nicht dem Material von benachbarten Bauteilen und/oder Bauteilabschnitten der Vollmantel-Schneckenzentrifuge entspricht. Bei Feststellung, dass die Ermüdung des zu ersetzenden Bauteils und/oder des zu ersetzenden Bauteilabschnitts auf die vorherige Materialauswahl zurückzuführen ist, kann bei der Reparatur des beschädigten Bauteils und/oder des beschädigten Bauteilabschnitts ein anderes Material verwendet werden. Eine Verwendung von unterschiedlichen Materialien ist bei der Anwendung eines formgebenden additiven Materialauftrags, insbesondere bei Anwendung eines Aufbauschweißverfahrens, überraschend gut möglich.

Es ist möglich, dass mehrere unterschiedliche Verfahren hinsichtlich eines formgebenden additiven Materialauftrags miteinander kombiniert werden. Es ist beispielsweise möglich, dass ein zu ersetzendes Bauteil und/oder ein zu ersetzender Bauteilabschnitt zunächst mittels Auftragsschweißen gefertigt wird und anschließend ein thermisches Spritzverfahren durchgeführt wird.

Die im Schritt b) erfassten Maße werden vorzugsweise als Daten an eine Vorrichtung zur Durchführung des Schritts c) gesendet und zur Steuerung und/oder Regelung des Schritts c) verwendet. Demnach ist es möglich, den additiven Materialauftrag aufgrund der im Schritt erfassten und als Daten abgespeicherten Maße automatisiert durchzuführen.

Erfindungsgemäß erfolgt vor dem Schritt a) ein dreidimensionales Erfassen des beschädigten Bauteils und/oder des beschädigten Bauteilabschnitts. Aufgrund eines derartigen Erfassens des beschädigten Bauteils und/oder des beschädigten Bauteilabschnitts kann anschließend im Schritt a) ein automatisiertes Entfernen eines beschädigten Bauteils und/oder eines beschädigten Bauteilabschnitts erfolgen.

Das Erfassen, insbesondere das dreidimensionale Erfassen, kann mit Hilfe eines 3D-Scans, wie dies beispielsweise mittels eines Lasersystems möglich ist, erfolgen.

Im Rahmen des formgebenden additiven Materialauftrags kann das auftragende Material in Form von Draht oder Pulver aufgebracht werden.

Das erfindungsgemäße Verfahren umfasst vorzugsweise einen Schritt d), der insbesondere nach dem Schritt c) durchgeführt wird. Im Schritt d) erfolgt eine abschließende Oberflächenbearbeitung. Die Oberflächenbearbeitung kann beispielsweise mittels eines Schleifvorganges durchgeführt werden. Auch die abschließende Oberflächenbearbeitung oder eine Oberflächenveredelung kann vollautomatisiert durchgeführt werden.

In einer bevorzugten Ausführungsform der Erfindung wird mittels des erfindungsgemäßen Verfahrens ein Abschnitt einer Schneckenwendel einer Zentrifugenschnecke repariert.

Offenbart wird außerdem eine Vollmantel-Schneckenzentrifuge. Die Vollmantel-Schneckenzentrifuge zeichnet sich dadurch aus, dass zumindest ein Bauteil und/oder ein Bauteilabschnitt mittels eines erfindungsgemäßen Verfahrens repariert ist.

Mit anderen Worten umfasst die offenbarte Vollmantel-Schneckenzentrifuge mindestens ein ersetztes Bauteil und/oder einen ersetzten Bauteilabschnitt, der mittels formgebendem additiven Materialauftrag hergestellt ist. Die derart hergestellten Bauteile und/oder Bauteilabschnitte weisen eine im Vergleich zum Stand der Technik verbesserte mechanische Eigenschaft auf. Unter anderem sind die Streckgrenze sowie die Bruchdehnung dieser Bauteile und/oder Bauteilabschnitt verbessert. Aufgrund einer kontrollierten Wärmeführung im erfindungsgemäßen Reparaturverfahren wird eine feinkörnige Gefügestruktur im Werkstoff gebildet.

Mit Hilfe des erfindungsgemäßen Verfahrens ist es möglich, dass die Reparaturen innerhalb einer kurzen Zeit erfolgen können. Außerdem kann ein hoher Automatisierungsgrad erreicht werden. Aufgrund der zumindest teilweise automatisierten Ausführung einzelner Verfahrensschritte ist auch eine hohe Wiederholgenauigkeit möglich. Außerdem können Kundenwünsche individualisiert umgesetzt werden.

Aufgrund des erfindungsgemäßen Verfahrens zur Reparatur von beschädigten Bauteilen und/oder beschädigten Bauteilabschnitten von Vollmantel-Schneckenzentrifugen ist die abschnittsweise Wiederherstellung von beschädigten Abschnitten möglich, so dass im Vergleich zu bekannten Reparaturverfahren zum einen Materialeinsparungen stattfinden und zum anderen Ressourcen geschont werden. Aufgrund eines präzisen formgebenden additiven Materialauftrags kann eine starke Reduzierung des eingesetzten Werkstoffes realisiert werden.

Die Erfindung wird im Folgenden anhand von Ausführungsbeispielen unter Bezugnahme auf die beigefügten, schematischen Zeichnungen näher erläutert.

Darin zeigen:
- Fig. 1a und 1b: ein Bauteil im beschädigten Zustand;
- Fig. 2: ein Bauteil mit zu ersetzenden Bauteilabschnitten; und
- Fig. 3: ein repariertes Bauteil mit ersetzten Bauteilabschnitten.

Im Folgenden werden für gleiche und gleichwirkende Teile dieselben Bezugsziffern verwendet.

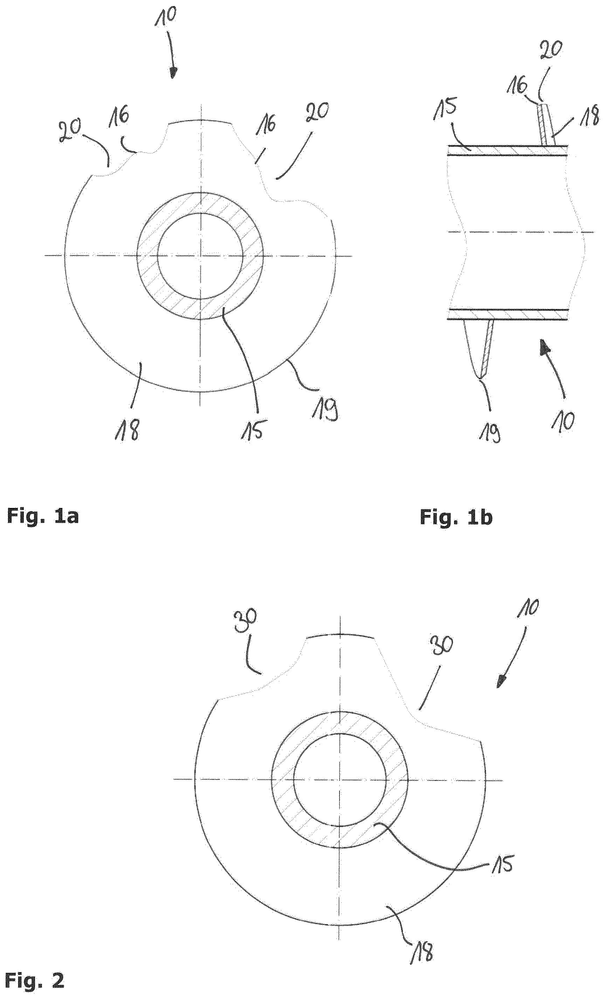

In den Fig. 1a-3 werden beispielhaft die erfindungsgemäßen Schritte eines Verfahrens zur Reparatur einer beschädigten Zentrifugenschnecke 10 dargestellt. Dies dient lediglich als Beispiel. Es ist möglich, dass weitere und/oder andere Bauteile einer Vollmantel-Schneckenzentrifuge mittels der gleichen Verfahrensschritten repariert werden.

Die Fig. 1a zeigt eine Vorderansicht einer Zentrifugenschnecke 10 mit einem Schneckenkörper 15 und einer Schneckenwendel 18.

In Fig. 1b ist die Zentrifugenschnecke in einem Längsschnitt abschnittsweise dargestellt. Es ist zu erkennen, dass die Schneckenwendel 18 an der Wendelspitze beschädigte Bauteilabschnitte 20 aufweist. Hier sind aus der Schneckenwendel 18 einzelne Abschnitte heraus- bzw. abgebrochen. Im Rahmen eines erfindungsgemäßen Verfahrens sollen diese beschädigten Bauteilabschnitte 20 repariert werden.

Im dargestellten Beispiel ist der Schneckenkörper 15 aus einem massiven zylindrischen Element gebildet. Es ist möglich, beschädigte Bauteilabschnitte eines derartigen Schneckenkörpers 15 mit Hilfe des erfindungsgemäßen Verfahrens zu reparieren.

In einem weiteren, nicht dargestellten Ausführungsbeispiel kann der Schneckenkörper bzw. die Schneckennabe 15 aus mehreren Stäben und/oder Streben gebildet sein, wobei einzelne Stäbe und/oder Streben mit Hilfe des erfindungsgemäßen Verfahrens repariert oder vollständig ersetzt werden können.

Wie in Fig. 2 dargestellt wird, wird der beschädigte Bauteilabschnitt 20 zunächst vorbereitet. Die in Fig. 1a dargestellte Abbruchkante 16 wird für beide beschädigten Bauteilabschnitte 20 vorbereitet. Es werden somit weitere Teile eines beschädigten Bauteilabschnittes 20 zunächst entfernt. Dies entspricht dem erfindungsgemäßen Schritt a).

Diese Begradigung der Abbruchkante 16 ist u.a. notwendig, um den formgebenden additiven Materialauftrag vereinfacht und kontrollierter durchführen zu können. In Fig. 2 sind somit zwei zu ersetzende Bauteilabschnitte 30 dargestellt. Diese sind zunächst zu erfassen. Im Schritt b) werden die Maße der zu ersetzenden Bauteilabschnitte 30 in Relation zu benachbarten Bauteilen bzw. im vorliegenden Fall in Relation zur verbleibenden Schneckenwendel 18 erfasst.

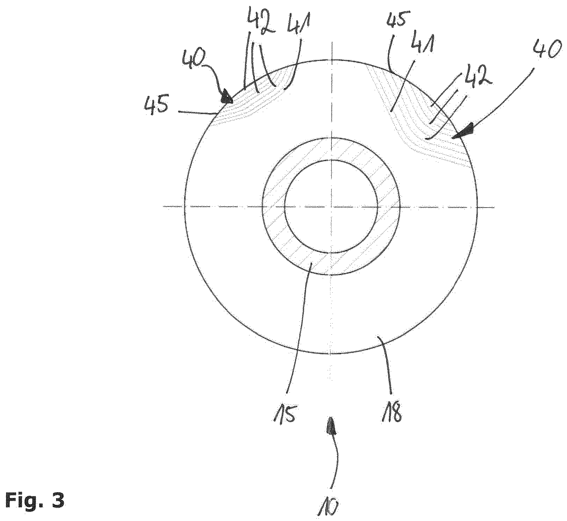

Diese erfassten Maße werden als Daten gespeichert. In einem Schritt c) (hier Fig. 3) erfolgt das Ersetzen des beschädigten und zwischenzeitlich vollständig entfernten Bauteilabschnitts durch vorgebenden additiven Materialauftrag.

In einer bevorzugten Ausführungsform der Erfindung erfolgt dies mittels Aufbauschweißen, insbesondere mittels Aufbauschweißen mit einem energiereduzierten Kurzlichtbogen. In Fig. 3 sind hierzu einzelne Schweißnähte 41 und 42 zu erkennen. Bei den Schweißnähten 41 handelt es sich jeweils um die erste Schweißnaht, die auf dem benachbarten Bauteilabschnitt, nämlich dem Abschnitt mit der noch existierenden Schneckenwendel 18 aufgetragen wird. Anschließend werden jeweils auf die ersten Schweißnähte 41 weitere Schweißnähte 42 aufgebracht. Alle aufgebrachten Schweißnähte 41 und 42 bilden nach Beendigung des Verfahrensschrittes c) einen vollständig ersetzten Bauteilabschnitt 40.

Nach Durchführen des Verfahrensschrittes c) erfolgt vorzugsweise ein Schleifvorgang. Mit Hilfe dieses Schleifvorganges, der auch Verschleifen genannt werden kann, kann insbesondere eine exakte Abschlusskante 45 hergestellt werden. Bei der Konstruktion bzw. Montage einer Vollmantel-Schneckenzentrifuge ist es besonders wichtig, dass ein definiertes Spaltmaß zwischen der Trommelinnenwand und der Schneckenwendel eingehalten wird.

Die Verschleißschutz-Beschichtung kann beispielsweise in Form einzelner Plättchen auf der Schneckenwendel aufgebracht sein.

Die ersetzten Bauteilabschnitte 40 weisen hinsichtlich der Streckgrenze sowie der Bruchdehnung gute mechanische Eigenschaften auf. Dies ist auf die während des Reparaturverfahrens kontrollierte Wärmeführung und die damit verbundene feinkörnige Gefügestruktur zurückzuführen.

### Bezugszeichenliste

- 10: Zentrifugenschnecke
- 15: Schneckenkörper
- 16: Abbruchkante
- 18: Schneckenwendel
- 19: Wendelspitze
- 20: Beschädigter Bauteilabschnitt
- 30: Zu ersetzender Bauteilabschnitt
- 40: Ersetzter Bauteilabschnitt
- 41: Erste Schweißnaht
- 42: Weitere Schweißnaht
- 45: Abschlusskante

## Patentansprüche

1. Verfahren zur Reparatur von beschädigten Bauteilen und/oder beschädigten Bauteilabschnitten (20) einer Vollmantel-Schneckenzentrifuge,
**gekennzeichnet durch**
die Schritte:
a) Entfernen des beschädigten Bauteils und/oder des beschädigten Bauteilabschnitts (20), nämlich einer Verschleißschutz-Beschichtung einer Schneckenwendel, wobei der Schritt a) vor dem Schritt b) erfolgt, wobei das Entfernen mittels eines thermischen Trennverfahrens automatisiert erfolgt,
b) Erfassen der Maße eines zu ersetzenden Bauteils und/oder eines zu ersetzenden Bauteilabschnitts (30) in Relation zu benachbarten Bauteilen und/oder Bauteilabschnitten (18) der Vollmantel-Schneckenzentrifuge;
c) Ersetzen des beschädigten Bauteils und/oder des beschädigten Bauteilabschnitts (20) durch formgebenden additiven Materialauftrag, mittels Durchführen von Cold Metal Transfer-Schweißen und/oder von Impulslichtbogen-Schweißen und/oder eines thermisches Spritzverfahrens,
wobei vor dem Schritt a) ein dreidimensionales Erfassen des beschädigten Bauteils und/oder des beschädigten Bauteilabschnitts (20) erfolgt.

2. Verfahren nach einem der vorangegangenen Ansprüche,
**dadurch gekennzeichnet, dass**
im Schritt b) eine dreidimensionale Vermessung, insbesondere mittels eines Lasersystems, erfolgt.

3. Verfahren nach einem der vorangegangenen Ansprüche,
**dadurch gekennzeichnet, dass**
die im Schritt b) erfassten Maße als Daten an eine Vorrichtung zur Durchführung des Schritts c) gesendet und zur Steuerung des Schritts c) verwendet werden.

4. Verfahren nach einem der vorangegangenen Ansprüche,
**dadurch gekennzeichnet, dass**
mindestens ein Abschnitt (20) einer Schneckenwendel (18) einer Zentrifugenschnecke (10) repariert wird.

## Claims

1. A method for repairing damaged components and/or damaged component portions (20) of a solid bowl centrifuge,
**characterized by**
the steps:
a) removing the damaged component and/or the damaged component portion (20), namely of a wear protection coating of a screw flight, wherein step a) takes place prior to step b), wherein the removing takes place in an automated manner by means of a thermal separating process,
b) capturing the dimensions of a component to be replaced and/or of a component portion (30) to be replaced in relation to adjacent components and/or component portions (18) of the solid bowl centrifuge;
c) replacing the damaged component and/or the damaged component portion (20) by means of forming additive material application, by way of carrying out cold metal transfer welding and/or pulsed-arc welding and/or a thermal spraying process,
wherein a three-dimensional capturing of the damaged component and/or of the damaged component portion (20) takes place prior to step a).

2. The method according to one of the preceding claims,
**characterized in that**
a three-dimensional measuring, in particular by means of a laser system, takes place in step b)

3. The method according to one of the preceding claims,
**characterized in that**
the dimensions captured in step b) are sent as data to a device for performing step c) and are used for controlling step c).

4. The method according to one of the preceding claims,
**characterized in that**
at least one portion (20) of a screw flight (18) of a centrifugal screw (10) is repaired.

## Revendications

1. Procédé, destiné à réparer des pièces endommagées et / ou des parties (20) de pièces endommagées (20) d'une centrifugeuse à vis à bol plein,
**caractérisé par**
les étapes consistant à :
a) retirer la pièce endommagée et / ou la partie de pièce (20) endommagée, à savoir un revêtement anti-usure d'une hélice à vis, l'étape a) s'effectuant avant l'étape b), le retrait s'effectuant par voie automatisée, au moyen d'un procédé de séparation thermique,
b) détecter les cotes d'une pièce qui doit être remplacée et / ou d'une partie (30) de pièce qui doit être remplacée en relation avec des pièces et / ou avec des parties (18) de pièces voisines de la centrifugeuse à vis à bol plein ;
c) remplacer la pièce endommagée et / ou la partie (20) de pièce endommagée par application additive de matière de façonnage, par réalisation d'un soudage par transfert de métal à froid et / d'un soudage par arc pulsé et / ou d'un procédé d'injection thermique,
avant l'étape a) étant effectuée une détection tridimensionnelle de la pièce endommagée et / ou de la partie (20) de pièce endommagée.

2. Procédé selon l'une quelconque des revendications précédentes,
**caractérisé en ce que**
dans l'étape b) est effectué un mesurage tridimensionnel, notamment au moyen d'un système laser.

3. Procédé selon l'une quelconque des revendications précédentes,
**caractérisé en ce que**
les cotes détectées à l'étape b) sont envoyées sous la forme de données à un dispositif destiné à réaliser l'étape c) et sont utilisées pour commander l'étape c).

4. Procédé selon l'une quelconque des revendications précédentes,
**caractérisé**
**en ce que** l'on répare au moins une partie (20) d'une hélice à vis (18) d'une vis (10) de centrifugeuse.
